# EUROPÄISCHE PATENTSCHRIFT

(11) **EP 1 181 458 B1**
(45) Veröffentlichungstag und Bekanntmachung des Hinweises auf die Patenterteilung: **25.02.2004**
(21) Anmeldenummer: 00940261.1
(22) Anmeldetag: 23.05.2000
(51) Int. Cl.: F15B 11/16, B29C 45/68

(54) **HYDRAULISCHER ANTRIEB MIT MEHREREN AUCH EINEN DIFFERENTIALZYLINDER UMFASSENDEN HYDRAULISCHEN VERBRAUCHERN**
HYDRAULIC DRIVE WITH SEVERAL HYDRAULIC CONSUMERS ALSO COMPRISING A DIFFERENTIAL CYLINDER
COMMANDE HYDRAULIQUE COMPORTANT PLUSIEURS CONSOMMATEURS HYDRAULIQUES COMPRENANT EGALEMENT UN VERIN DIFFERENTIEL

(30) Priorität: 28.05.1999 DE 19924473
(43) Veröffentlichungstag der Anmeldung: 27.02.2002
(73) Patentinhaber: Bosch Rexroth AG, 97816 Lohr am Main (DE)
(72) Erfinder: PÜSCHEL, Reiner, D-97816 Lohr/Main (DE)
(86) Internationale Anmeldenummer: PCT/EP2000/004672
(87) Internationale Veröffentlichungsnummer: WO 2000/073667

(56) Entgegenhaltungen:
- EP-A- 0 516 864
- EP-A- 0 911 529
- DE-A- 1 804 522
- DE-A- 19 640 100
- US-A- 3 894 824
- US-A- 4 907 960
- US-A- 5 161 373
- US-A- 5 443 782
- US-A- 5 613 361

## Beschreibung

Die Erfindung betrifft einen hydraulischen Antrieb, der mehrere hydraulische Verbraucher umfaßt, unter denen sich auch ein Differentialzylinder befindet und die insbesondere an einer Kunststoffspritzgießmaschine angeordnet sind, und der die Merkmale aus dem Oberbegriff des Patentanspruchs 1 aufweist.

Aus der DE 40 08 792 A1 ist schon ein hydraulischer Antrieb mit einem Differentialzylinder und mit zwei Hydromaschinen, die als Pumpen und als Motoren arbeiten, bekannt. Die beiden Hydromaschinen dienen dazu, um den Kolben des Differentialzylinders eingespannt, d.h. mit einem höheren Druckniveau als es zum Bewegen der Last eigentlich notwendig ist, zu verfahren. Dazu ist die erste Hydromaschine mit einem ersten Anschluß mit einem Tank verbunden, während vom zweiten Anschluß eine Druckleitung direkt zum kolbenstangenabseitigen Arbeitsraum des Differentialzylinders führt. Die zweite Hydromaschine ist unmittelbar zwischen den beiden Arbeitsräumen des Differentialzylinders angeordnet. Beide Hydromaschinen sind mit einem Elektromotor gekoppelt und können von diesem mit gleicher Drehzahl angetrieben werden. Außerdem sind beide Hydromaschinen in ihrem Hubvolumen verstellbar. Zum Ausfahren der Kolbenstange wird die zweite Hydromaschine auf ein bestimmtes Hubvolumen gestellt, durch das, konstante Drehzahl des Elektromotors vorausgesetzt, die Ausfahrgeschwindigkeit der Kolbenstange bestimmt ist. Ohne Änderung der Drücke in den Arbeitsräumen muß dann die erste Hydromaschine pro Zeiteinheit ein Volumen an Druckmittel in den kolbenstangenabseitigen Arbeitsraum fördern, das genau dem Volumen des pro Zeiteinheit ausgeschobenen Kolbenstangenabschnitts entspricht. Die Druckniveaus in den beiden Arbeitsräumen können auf zweierlei Weise geändert werden. Zum einen kann man ohne eine Änderung des Hubvolumens der zweiten Hydromaschine und damit ohne eine Änderung der Geschwindigkeit des Kolbens und der Kolbenstange des Differentialzylinders das Hubvolumen der ersten Hydromaschine vergrößern (Erhöhung des Druckniveaus) bzw. verkleinern (Erniedrigung des Drucknivaus). Dann wird von den beiden Hydromaschinen zusammen mehr bzw. weniger Volumen an Druckmittel in den kolbenstangenabseitigen Arbeitsraum des Differentialzylinders gefördert als das Volumen dieses Arbeitsraumes zunimmt, so daß sich der Druck in diesem Arbeitsraum erhöht bzw. erniedrigt. Der Druck im kolbenstangenseitigen Arbeitsraum steigt entsprechend an bzw. fällt entsprechend ab. Wenn das gewünschte Druckniveau erreicht ist, wird das Hubvolumen der ersten Hydromaschine wieder verkleinert bzw. vergrößert. Zum andern kann man die Druckniveaus auch ohne eine Änderung des Hubvolumens der ersten Hydromaschine ändern, indem man das Hubvolumen der zweiten Hydromaschine verkleinert (Erhöhung der Druckniveaus) bzw. vergrößert (Erniedrigung der Druckniveaus). Der Kolben des Differentialzylinders wird dann langsamer bzw. schneller, so daß die erste Hydromaschine wiederum mehr bzw. weniger Druckmittel fördert, als sich das Volumen des kolbenstangenabseitigen Arbeitsraums vergrößert, und sich der Druck in diesem Raum erhöht bzw. erniedrigt. Durch Verstellung des Hubvolumens der zweiten Hydromaschine auf den ursprünglichen Wert wird die Druckänderung beendet und die alte Geschwindigkeit des Kolbens wieder erreicht.

Beim Einfahren der Kolbenstange muß, wenn die Druckniveaus konstant sein sollen, die erste Hydromaschine ein Ölvolumen pro Zeiteinheit zum Tank gelangen lassen, das dem Volumen des pro Zeiteinheit eingefahrenen Kolbenstangenabschnitts entspricht. Zur Erhöhung der Druckniveaus wird bis zum Erreichen der neuen Druckniveaus entweder das Hubvolumen der ersten Hydromaschine verkleinert oder das Hubvolumen der zweiten Hydromaschine vergrößert. Zur Erniedrigung der Druckniveaus wird bis zum Erreichen der niedrigeren Druckniveaus entweder das Hubvolumen der ersten Maschine vergrößert oder das Hubvolumen der zweiten Hydromaschine verkleinert.

Natürlich ist es sowohl beim Einfahren als auch beim Ausfahren der Kolbenstange zur Veränderung der Druckniveaus möglich, beide Hydromaschinen kombiniert zu verstellen.

Aus der CA 605 046 ist ebenfalls ein hydraulischer Antrieb mit einem Differentialzylinder und mit einer ersten Hydromaschine und einer zweiten Hydromaschine bekannt. Die beiden Hydromaschinen haben ein konstantes Hubvolumen und sind von einem Elektromotor antreibbar. Die erste Hydromaschine kann, als Pumpe arbeitend, Druckmittel aus einem Tank ansaugen und in den kolbenstangenabseitigen Arbeitsraum des Differentialzylinders abgeben. Als Motor arbeitend läßt die erste Hydromaschine Druckmittel aus diesem Arbeitsraum zum Tank abströmen. Die zweite Hydromaschine ist wiederum zwischen den beiden Arbeitsräumen des Differentialzylinders angeordnet. Hier sind die beiden Arbeitsräume des Differentialzylinders, der innerhalb eines Krans verwendet wird, durch jeweils ein Ventil, das zwischen den beiden Anschlüssen der zweiten Hydromaschine und den Arbeitsräumen angeordnet ist, absperrbar, um den Kolben und die Kolbenstange hydraulisch zu verriegeln. Auch kann die zweite Hydromaschine über ein Rückschlagventil und ihren Anschluß, der mit dem kolbenstangenseitigen Arbeitsraum verbindbar ist, Druckmittel aus dem Tank ansaugen. Dadurch soll durch Leckage verlorengegangenes Druckmittel ersetzt werden. Ein eingespanntes Verfahren des Kolbens des Differentialzylinders ist hier nicht vorgesehen und bei Verwendung von Hydromaschinen mit einem konstanten Hubvolumen auch ohne zusätzliche Ventile nicht möglich.

Beide zitierten Druckschriften zeigen hydraulische Antriebe, bei denen die beiden Hydromaschinen zur Druckmittelversorgung eines einzigen hydraulischen Verbraucher dienen.

Der Erfindung liegt die Aufgabe zugrunde, einen hydraulischen Antrieb mit den Merkmalen aus dem Oberbegriff des Patentanspruchs 1 so auszubilden, daß ohne eine zusätzliche Hydropumpe wenigstens ein weiterer hydraulischer Verbraucher betätigt werden kann.

Dieses Ziel wird bei einem hydraulischen Antrieb, der die Merkmale aus dem Oberbegriff des Patentanspruchs 1 aufweist, gemäß dem kennzeichnenden Teil dieses Patentanspruchs dadurch erreicht, daß ein erster Anschluß des wenigstens einen weiteren hydraulischen Verbrauchers über ein Wegeventil mit der Druckleitung und ein zweiter Anschluß des weiteren hydraulischen Verbrauchers mit Tank verbindbar ist. Beide Hydromaschinen werden also dazu verwendet, um als Hydropumpen die weiteren hydraulischen Verbraucher mit Druckmittel zu versorgen. Dabei saugt die zweite Hydromaschine über das Rückschlagventil Druckmittel aus dem Tank an. Beim Betrieb des weiteren hydraulischen Verbrauchers sind die beiden Arbeitsräume des Differentialzylinders durch das oder durch die Absperrventile abgesperrt, so daß durch den Betrieb des weiteren hydraulischen Verbrauchers der Zustand des Differentialzylinders nicht geändert wird. Für die weiteren Verbraucher stehen somit die beiden Teilfördermengen der beiden Hydromaschinen zur Verfügung. Dies bedeutet, daß relativ kleine Hydromaschinen verwendet werden können.

Vorteilhafte Ausgestaltungen eines erfindungsgemäßen hydraulischen Antriebs kann man den Unteransprüchen entnehmen.

So sind gemäß Patentanspruch 2 die beiden Hydromaschinen in ihrem Hubvolumen verstellbar. Dadurch ist, wie einleitend ausgeführt worden ist, auf einfache Weise ein druckeingespanntes Verfahren des Differentialzylinders möglich. Zudem ist es besonders günstig, wenn die verstellbaren Hydromaschinen von kleiner Nenngröße sein können. Kleine Hydromaschinen sind in ihrer Verstellung sehr schnell und entwickeln relativ wenig Geräusche.

In der besonders bevorzugten Weiterbildung gemäß Patentanspruch 3 ist der wenigstens eine weitere hydraulische Verbraucher über ein eingangsseitig an der Druckleitung liegendes Stauventil von den beiden Hydromaschinen mit Druckmittel versorgbar. Das Stauventil öffnet bei einem zur Verstellung des Fördervolumens der Hydromaschinen ausreichenden Mindestdruck. Dadurch ist sichergestellt, daß zwischen den mit dem Stauventil verbundenen Anschlüssen der Hydromaschinen und dem Stauventil der zur Verstellung der Hydromaschinen notwendige Stelldruck herrscht. Der Mindestdruck kann genau dem maximal notwendigen Stelldruck entsprechen, er kann jedoch auch höher gewählt werden. Ein Stauventil, wie es vorteilhafterweise verwendet wird, ist in der DE 43 34 167 A1 beschrieben.

Gemäß Patentanspruch 4 sind die maximalen Fördermengen pro Zeiteinheit der beiden Hydromaschinen zweckmäßigerweise auf das Verhältnis der wirksamen Druckflächen des Differentialzylinders abgestimmt. Somit können zum Betätigen des Differentialzylinders die beiden Hydromaschinen im Bereich maximaler Verstellung arbeiten, was hinsichtlich des Wirkungsgrades besonders günstig ist. Bei gleicher Drehzahl der beiden Hydromaschinen sind ihre maximalen Hubvolumen, also ihre maximalen Fördermengen pro Umdrehung, entsprechend abgestimmt.

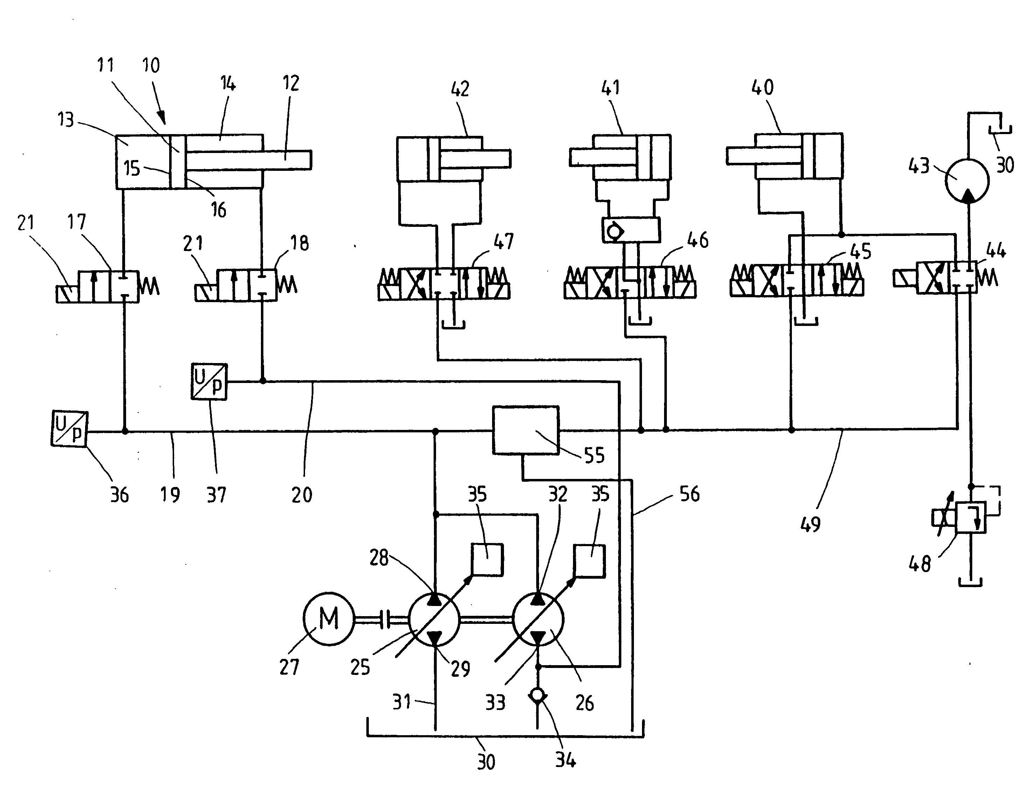

Ein Ausführungsbeispiel eines erfindungsgemäßen hydraulischen Antriebs, das für eine Kunststoffspritzgießmaschine konzipiert ist, ist in der Zeichnung dargestellt. An Hand dieser Zeichnung wird die Erfindung nun näher erläutert.

Ein Differentialzylinder 10 mit einem Kolben 11 und einer Kolbenstange 12 dient zum Schließen und Öffnen einer Form an einer Kunststoffspritzgießmaschine. Er besitzt einen kolbenstangenseitigen, ringförmigen Arbeitsraum 14 und einen kolbenstangenabseitigen vollzylindrischen Arbeitsraum 13. Die dem Druck im Arbeitsraum 13 ausgesetzte Kolbenfläche 15 ist um den Querschnitt der Kolbenstange 12 größer als die dem Druck im Arbeitsraum 14 ausgesetzte ringförmige Kolbenfläche 16. Jedem Arbeitsraum 13 und 14 ist unmittelbar ein als 2/2-Wegeventil ausgebildetes Absperrventil 17 bzw. 18 vorgeschaltet, das in einer Ruhestellung den entsprechenden Arbeitsraum gegen eine Leitung 19 bzw. 20 absperrt und das von einem Elektromagneten 21 in eine Durchgangsstellung gebracht werden kann. Das Flächenverhältnis der Kolbenfläche 15 zur Kolbenfläche 16 ist 2:1.

Es sind zwei Hydromaschinen 25 und 26 vorhanden, die beide sowohl als Hydropumpe als auch als Hydromotor betreibbar sind, die mit gleicher Drehzahl umlaufen und die in ihrem Hubvolumen verstellt werden können. Die beiden Hydromaschinen sind mechanisch derart mit einem Elektromotor 27 gekoppelt, daß sie sowohl vom Elektromotor angetrieben werden als auch selbst den Elektromotor antreiben können. Die erste Hydromaschine 25 ist mit einem ersten Anschluß 28 mit der über das Absperrventil 17 zum Arbeitsraum 13 des Differentialzylinders führenden Druckleitung 19 und mit einem zweiten Anschluß 29 mit einer zu einem Tank 30 führenden Tankleitung 31 verbunden. Von ihr kann also Druckmittel aus dem Tank 30 angesaugt und in die Druckleitung 19 abgegeben werden. Dabei arbeitet die Hydromaschine 25 als Pumpe. Ebenso kann aus der Druckleitung 19 Druckmittel über die Hydromaschine 25 zum Tank 30 abströmen. Dabei arbeitet die Hydromaschine 25 als Hydromotor. Die zweite Hydromaschine 26 ist mit ihrem ersten Anschluß 32 ebenfalls mit der Druckleitung 19 verbunden. Der zweite Anschluß 33 ist mit der Leitung 20 verbunden. Außerdem ist zwischen dem Anschluß 33 und der Leitung 20 einerseits und dem Tank 30 andererseits ein Rückschlagventil 34 angeordnet, das zum Tank 30 hin sperrt und über das die Hydromaschine 26 Druckmittel aus dem Tank ansaugen kann.

Bei den beiden Hydromaschinen 25 und 26 handelt es sich um Axialkolbenmaschinen, die beide mit einem Druck- und Förderstromregler 35 ausgestattet sind, wie dies im Datenblatt RD 92 701/02.95 der Anmelderin, Seite 36 unten, beschrieben ist. Dabei wird der Druck und das Verdrängungsvolumen der Hydromaschine durch ein elektrisch angesteuertes Proportionalventil geregelt. Dazu wird der Druck, der geregelt werden soll, durch einen elektrischen Druckaufnehmer erfaßt. Im Ausführungsbeispiel ist ein erster solcher elektrischer Druckaufnehmer 36 zwischen dem Ventil 17 und den Anschlüssen 28 und 32 der Hydromaschinen 25 und 26 an die Druckleitung 19 angeschlossen. Ein zweiter Druckaufnehmer 37 ist zwischen dem Ventil 18 und dem Anschluß 33 der Hydropumpe 26 an die Leitung 20 angeschlossen.

Beim Ausfahren der Kolbenstange 12 des Schließzylinders 10 arbeitet die Hydromaschine 25 als Pumpe und gibt aus dem Tank 30 angesaugtes Druckmittel in die Druckleitung und in den Arbeitsraum 13 des Schließzylinders 10 ab. Die Hydromaschine 26 arbeitet in Abhängigkeit von den in den Arbeitsräumen 13 und 14 herrschenden Drücken als Hydropumpe oder als Hydromotor. Das aus dem Arbeitsraum 14 des Schließzylinders 10 verdrängte Druckmittel fließt über die Hydromaschine 26 ebenfalls in die Druckleitung 19 und den Arbeitsraum 13. Beim Einfahren der Kolbenstange 12 wird ein Teil des aus dem Arbeitsraum 13 verdrängten Druckmittels über die Hydromaschine 26 dem Arbeitsraum 14 zugeführt, während ein weiterer Teil über die Hydromaschine 25 zum Tank 30 abströmt.

Beim Abbremsen der mit dem Schließzylinder zu bewegenden großen Masse wird dabei Energie zurückgewonnen, die als elektrische Energie über den Elektromotor 27 in das Netz eingespeist wird.

Der gezeigte hydraulische Antrieb weist drei weitere Differentialzylinder 40, 41 und 42 sowie einen Hydromotor 43 auf. Der Hydromotor 43 dient dem Antrieb einer Schnecke, der Differentialzylinder 40 dient dem Einspritzen der Kunststoffmasse in eine Form, mit dem Differentialzylinder 41 wird die Einspritzeinheit inklusive einer Einspritzdüse an die Form angelegt und mit dem Differentialzylinder 42 werden Auswerfer betätigt. Der Hydromotor 43 ist mit einem Anschluß dauernd mit Tank 30 verbunden. Der andere Anschluß wird über ein elektromagnetisch betätigbares Wegeventil 44 entweder abgesperrt oder mit einer Versorgungsleitung 49 verbunden. Die drei Differentialzylinder 40, 41 und 42 werden jeweils über 4/3-Wegeventile 45, 46 und 47 gesteuert, die zwei Verbraucheranschlüsse, die mit den Arbeitsräumen der Differentialzylinder verbunden sind, einen Tankanschluß und einen mit der Versorgungsleitung 49 verbundenen Versorgungsanschluß aufweisen. Im geöffneten Zustand des Wegeventils 44 ist außerdem der kolbenstangenabseitige Arbeitsraum des Spritzzylinders 40 mit einem proportional verstellbaren Druckbegrenzungsventil 48 verbunden, durch das in dem genannten Arbeitsraum ein bestimmter Druck einstellbar ist. Gegen diesen Druck wird der Kolben des Spritzzylinders zurückgeschoben, wenn der Hydromotor 43 in Betrieb ist. Das Wegeventil 45 nimmt dabei die gezeigte Position ein.

Über die Versorgungsleitung 49 fließt von den beiden Hydromaschinen 25 und 26 gefördertes Druckmittel den hydraulischen Verbrauchern 40 bis 43 zu. Dabei ist die Versorgungsleitung 49 nicht unmittelbar mit der Druckleitung 19 bzw. mit den beiden Anschlüssen 28 und 32 der Hydromaschinen 25 und 26 verbunden. Vielmehr ist dazwischen ein Stauventil 55 geschaltet, durch das in der Druckleitung 19 auch dann ein zur Verstellung der Hydromaschinen notwendiger Mindestdruck aufrechterhalten wird, wenn einer der Verbraucher 40 bis 43 nur einen Lastdruck erzeugt, der niedriger als der zur Verstellung notwendige Druck ist. Das Stauventil kann gemäß der vorveröffentlichten deutschen Patentanmeldung DE 43 34 167 A1 der Anmelderin ausgebildet sein. In der vom Stauventil zum Tank führenden Tankleitung kann ein Druckbegrenzungsventil integriert sein.

## Patentansprüche

1. Hydraulischer Antrieb mit mehreren auch einen Differentialzylinder (10) umfassenden hydraulischen Verbrauchern (10, 40, 41, 42, 43), insbesondere an einer Kunststoffspritzgießmaschine, mit einer ersten als Pumpe und als Motor arbeitenden Hydromaschine (25), die mit einem zweiten Anschluß (29) mit einem Tank (30) verbunden ist und mit einem ersten Anschluß (28) an einer Druckleitung (19) liegt, die mit dem kolbenstangenabseitigen Arbeitsraum (13) des Differentialzylinders (10) über ein Absperrventil (17) verbindbar ist, und mit einer zweiten als Pumpe und als Motor arbeitenden Hydromaschine (26), die mit einem ersten Anschluß (32) an die Druckleitung (19) angeschlossen und mit einem zweiten Anschluß (33) über ein zu diesem hin öffnendes Rückschlagventil (34) mit einem Tank (30) und über ein Absperrventil (18) mit dem kolbenstangenseitigen Arbeitsraum (14) des Differentialzylinders (10) verbindbar ist,
**dadurch gekennzeichnet, daß** ein Anschluß wenigstens eines weiteren hydraulischen Verbrauchers (40, 41, 42, 43) über ein Wegeventil (44, 45, 46, 47) mit der Druckleitung (19) verbindbar ist.

2. Hydraulischer Antrieb nach Anspruch 1, **dadurch gekennzeichnet, daß** die beiden Hydromaschinen (25, 26) in ihrem Hubvolumen verstellbar sind.

3. Hydraulischer Antrieb nach Anspruch 2, **dadurch gekennzeichnet, daß** der wenigstens eine weitere hydraulische Verbraucher (40, 41, 42, 43) über ein eingangsseitig an der Druckleitung (19) liegendes Stauventil (55) von den beiden Hydromaschinen (25, 26) mit Druckmittel versorgbar ist.

4. Hydraulischer Antrieb nach Anspruch 2 oder 3, **dadurch gekennzeichnet, daß** die maximalen Fördermengen der beiden Hydromaschinen (25, 26) in einem Verhältnis a-1 stehen, wobei a gleich dem Verhältnis der wirksamen Druckflächen (15. 16) des Differentialzylinders (10) ist.

5. Hydraulischer Antrieb nach Anspruch 4, **dadurch gekennzeichnet, daß** die beiden Hydromaschinen (25, 26) mit der gleichen Drehzahl betrieben werden und ihre Hubvolumina in einem Verhältnis a-1 stehen.

## Claims

1. A hydraulic drive with a plurality of hydraulic consumers (10, 40, 41, 42, 43) also comprising a differential cylinder (10), in particular on a plastics injection-molding machine, having a first hydraulic machine (25) which operates as a pump and as a motor and is connected, by means of a second port (29), to a tank (30) and rests against a pressure line (19) by means of a first port (28), which pressure line can be connected to that working chamber (13) of the differential cylinder (10) which is remote from the piston rod via a shut-off valve (17), and having a second hydraulic machine (26) which operates as a pump and as a motor and is connected, by means of a first port (32), to the pressure line (19) and can be connected, by means of a second port (33), to a tank (30) via a nonreturn valve (34) which opens toward the second port (33) and via a shut-off valve (18) to the piston-rod-side working chamber (14) of the differential cylinder (10), **characterized in that** a port of at least one further hydraulic consumer (40, 41, 42, 43) can be connected to the pressure line (19) via a directional control valve (44, 45, 46, 47).

2. A hydraulic drive according to claim 1, **characterized in that** the displacement of the two hydraulic machines (25, 26) is variable.

3. A hydraulic drive according to claim 2, **characterized in that** the at least one further hydraulic consumer (40, 41, 42, 43) can be supplied with pressure medium from both hydraulic machines (25, 26) via an back pressure valve (55) which lies on the inlet side on the pressure line (19).

4. A hydraulic drive according to claim 2 or 3, **characterized in that** the maximum delivery volumes of the two hydraulic machines (25, 26) are in a ratio a-1, where a is equal to the ratio of the effective pressure faces (15, 16) of the differential cylinder (10).

5. A hydraulic drive according to claim 4, **characterized in that** the two hydraulic machines (25, 26) are operated at the same rotational speed, and their displacements are in a ratio a-1.

## Revendications

1. Un entraînement hydraulique doté de plusieurs récepteurs (10, 40, 41, 42, 43) hydrauliques comprenant également un vérin (10) différentiel, en particulier au niveau d'une machine de moulage par injection du plastique, doté d'une première machine (25) hydraulique travaillant comme pompe et comme moteur, qu'un deuxième raccord (29) relie à un réservoir (30), qu'un premier raccord (28) raccorde à une conduite (19) de pression et qui peut être reliée à la chambre (13) de travail du côté détourné de la tige de vérin du vérin (10) différentiel en passant par une valve (17) de fermeture, et doté d'une deuxième machine (26) hydraulique travaillant comme pompe et comme moteur, qu'un premier raccord (32) relie à la conduite (19) de pression et qu'un deuxième raccord (33) peut relier à un réservoir (30), en passant par un clapet (34) anti-retour ouvrant vers ce dernier, et à la chambre (14) de travail du côté tige de vérin du vérin (10) différentiel, en passant par une valve (18) d'isolation,
**caractérisé en ce qu'**un raccord d'au moins un récepteur (40, 41, 42, 43) hydraulique supplémentaire puisse être relié à la conduite (19) de pression en passant par un distributeur (44, 45, 46, 47).

2. Un entraînement hydraulique selon la revendication n° 1, **caractérisé en ce que** les deux machines (25, 26) hydrauliques soient de cylindrée variable.

3. Un entraînement hydraulique selon la revendication n° 2, **caractérisé en ce que** les récepteurs (40, 41, 42, 43) hydrauliques supplémentaires, qui sont au moins au nombre de un, puissent être alimentés en fluide de pression par les deux machines (25, 26) hydrauliques en passant par une valve (55) de retenue, laquelle est disposée côté entrée au niveau de la conduite (19) de pression.

4. Un entraînement hydraulique selon la revendication n° 2 ou n° 3, **caractérisé en ce que** les débits de refoulement maximum des deux machines (25, 26) hydrauliques présentent un rapport de a-1, cependant que a égale le rapport entre les surfaces (15, 16) de pression effectives du vérin (10) différentiel.

5. Un entraînement hydraulique selon la revendication n° 4, **caractérisé en ce que** les deux machines (25, 26) hydrauliques soient entraînées avec la même vitesse de rotation et leurs cylindrées présentent un rapport de a-1.
